# EUROPEAN PATENT APPLICATION

(11) **EP 4 814 771 A1**
(43) Date of publication of application: **30.09.2026**
(21) Application number: 26167116.8
(22) Date of filing: 24.03.2026
(51) Int. Cl.: G06F 21/64, H04L 9/32

(54) **INTEGRATED SYSTEM FOR TREATMENT AND PROCESSING OF DATA OF AN OPERATING ENVIRONMENT AND CORRESPONDING METHOD**

(30) Priority: 26.03.2025 IT 202500006267
(71) Applicant: Aleardo Furlani S.r.l., 05100 Terni (IT)
(72) Inventor: FURLANI, Aleardo, 00123 ROMA (IT); BRIZZI, Luca, 00015 MONTEROTONDO (RM) (IT)
(74) Representative: Bellomia, Paolo

(57) **Abstract**

Described is an integrated system for the treatment and processing of data of an operating environment comprising: a device (11) for the collection of data (D1) to be treated; a device (12) for transmission of the collected data (D1); a device (13) for storage of the transmitted data (D1); a device (20) for processing the data (D1) comprising a processing unit (21) configured to: define (210) a plurality of time references (Ti) and position references (Pi) for the data (D1) during the treatment; identify (211) a level of access (Level_i) to the basic data (D1), to the time references (Ti) and to the position references (Pi) based on predefined categories (CATi) of users (Ui); generate during the treatment a plurality of intermediate registrations (TKi) including the data (D1), the respective time references (Ti) and the position references (Pi) and identification data of a user (Ui) authorised at the identified access level (Level_i); certify (213) by cryptographic techniques during the treatment, each intermediate registration of the plurality of intermediate registrations (TKi), thereby determining corresponding intermediate certified registrations (TKCi). The invention also describes a method, implemented by a computer, for the integrated treatment and processing of data of an operating environment.

## Description

### TECHNICAL FIELD OF APPLICATION

The present invention relates to an integrated system for the treatment and processing of data of an operating environment.

The present invention also relates to a method implemented by a computer for the treatment and processing of data of an operating environment.

In particular, the present invention relates to a system and a method for the treatment and processing of data of an operating environment in which the collection of the data to be treated is carried out, but not exclusively, through a plurality of detection systems and devices. These can include different types of sensors, portable electronic devices, environmental monitoring systems, GPS equipment and advanced mobile platforms. These include autonomous and remote controlled vehicles, both terrestrial, maritime and aerial, such as UAS (Unmanned Aircraft Systems), UAV (Unmanned Aerial Vehicles), ROV (Remotely Operated Vehicles) and other robotic devices intended for data collection and processing in various operational contexts.

In addition, the system can make use of quantum sensors, which exploit quantum mechanical phenomena to make extremely precise measurements of physical parameters. These sensors include quantum magnetometers, quantum accelerometers and gyroscopes, gravitational gradiometers and atomic clocks, enabling the detection of weak signals and improving the accuracy of environmental and operational measurements.

The heterogeneity of the acquisition devices allows the system to be adapted to multiple application scenarios, ensuring precise, dynamic and scalable data collection according to specific operational needs.

### PRIOR ART

There are prior art data treatment processing systems that provide for data collection, treatment and processing and data certification only at the end of the entire process and with respect to the entire process.

There are prior art systems for the treatment and processing of data that employ a variety of technologies and devices for data collection, which are adaptable to different operational contexts. These include UAV (Unmanned Aerial Vehicles), UAS (Unmanned Aircraft Systems), ROV (Remotely Operated Vehicles), and other autonomous or remotely controlled vehicles capable of operating in aerial, terrestrial and underwater environments.

In addition to the autonomous vehicles, fixed and mobile sensors, GPS equipment, environmental monitoring systems and advanced portable devices are used. This variety of instruments enables a highly scalable and adaptable data collection across multiple industrial and scientific sectors, including mapping, precision farming, surveillance, environmental monitoring, management of emergencies and manufacturing.

According to the prior art, the management of the lifecycle of the collected data, from the collection to the transmission and to their processing, presents significant technical drawbacks, in particular with regard to the integrity, security and authenticity of the information/data collected.

The aim of the present invention is to provide a system and a method for the treatment and processing of data of an operating environment optimised in terms of security, integrity, authenticity and traceability of the treated data.

### DISCLOSURE OF THE INVENTION

According to a first aspect, the invention describes an integrated system for the treatment and processing of data of an operating environment according to claim 1.

Advantageous aspects are described in the dependent claims from 2 to 13. According to a second aspect, the invention describes a method, implemented by a computer, for the treatment and processing of data of an operating environment as described in claim 13.

Advantageous aspects are described in the dependent claim 14.

The invention provides for an automatic generation of unique registrations, also called tokens, identifying the collected data that are subject to treatment and processing, with the aim of guaranteeing security, integrity, authenticity and traceability of the treated data.

The invention achieves at least the following technical effects:
- generation of an indissoluble and certified link between the event, the data detected/treated and the user responsible for the treatment at each step of the treatment process;
- certification of the monitoring chain, to certify the lifecycle of the collected data, from the collection to the transmission up to their processing;
- efficient certification of each sub-step of the treatment chain;
- efficient retrieval / tracking of the collected data in terms of spatial and temporal information and with regards to the user responsible;
- minimal use of transmission bandwidth for communication of the certified data of each sub-step of the treatment chain;
- guarantee of security, integrity, authenticity and traceability of the collected data for the purpose of automating the certification processes;
- ease of reconstruction of operations carried out by the system on the data collected.

The technical effects/advantages mentioned and the other technical effects/advantages of the invention are described in more detail below in the description of an embodiment illustrated by way of general example in the accompanying drawings.

### BRIEF DESCRIPTION OF THE DRAWINGS

Figure 1 is a block diagram of a system according to the invention.
Figure 2 is a detailed block diagram of a first specific block of the system of Figure 1.
Figure 3 is a detailed block diagram of a second specific block of the system of Figure 1.
Figure 4 shows a preferred embodiment of the system according to the invention.

### DETAILED DESCRIPTION

The invention develops an innovative and global system for the verification and certification of the identity of an event, through the structured integration of physical data collected from certified devices and personal data of the operators involved in the process. This solution makes it possible to accurately establish the authenticity, integrity and traceability of events, providing a certified and verifiable basis for the data analysis and treatment.

The invention introduces a secure and universal digital infrastructure, designed for the certification of events and de facto states, with a strong focus on protecting the privacy of the users. The data acquired are, in fact, encrypted and stored locally according to a hierarchical order of access, ensuring that every piece of information is accessible only to authorised users based on specific authorisation levels. This approach not only improves the security and the confidentiality of the information processed, but also ensures that the control of the accesses is highly granular and dynamically configurable.

A distinctive aspect of the invention is the ability to associate certified digital identities with the events, introducing an innovative mechanism of connection between the artificial intelligence (AI) agents and the "event identities". This system makes it possible to verify in real time that an AI agent, whose task is to operate autonomously without direct supervision by a human being, is acting in compliance with the authorisations received and on behalf of legitimate third parties. The adoption of this paradigm introduces a higher level of accountability and transparency in the interaction between automated systems and human decision-making processes, making it possible to trace the actions carried out by AI agents and attribute them to specific responsible entities.

The invention describes an integrated system for the treatment and processing of data of an operating environment comprising a data collection device; a device for transmitting the collected data to be treated; a device for storing the transmitted data; a data processing device comprising a processing unit configured to: define a plurality of time references and position references for the data during the treatment; identifying a level of access to the data, to the time references and to the position references based on predefined categories of users; generating during the treatment a plurality of intermediate registrations comprising the data, the respective time references and the position references, and data identifying a user authorised to access the data at the identified access level; certifying by cryptographic techniques during treatment, each intermediate registration of the plurality of intermediate registrations.

The system according to the invention guarantees a complete management, security and traceability of the data collected through the integration of innovative technologies. The system according to the invention is distinguished by its key characteristics, such as data traceability, security, granular management of accesses and generation of certificates.

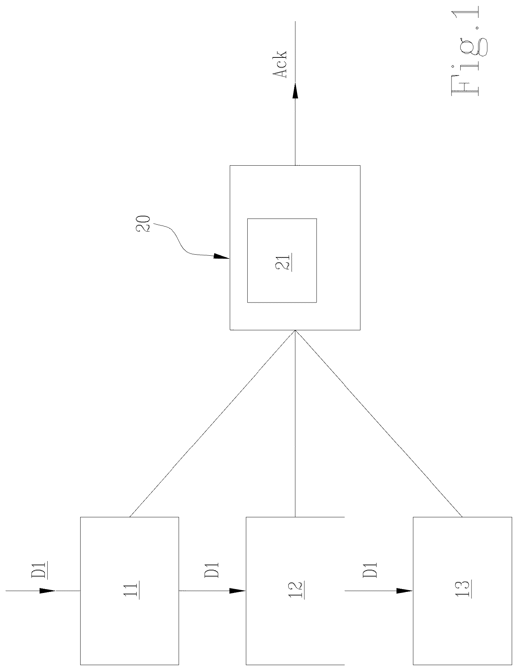

With particular reference to Figure 1, an integrated system for the treatment and processing of data D1 of an operating environment, according to the invention, comprises a plurality of devices for processing data designed for a treatment of data from their collection to the storage.

In particular, the data treatment devices comprise a device 11 for collecting data D1.

Preferably, the collection device 11 comprises one or more autonomous or remote controlled vehicles, both terrestrial, maritime and aerial, such as UAS (Unmanned Aircraft Systems), UAV (Unmanned Aerial Vehicles), ROV (Remotely Operated Vehicles)

In particular, the collection device (11) comprises an unmanned aerial vehicle (UAV).

The use of UAVs (Unmanned Aerial Vehicles) for data collection applies to various industrial and scientific sectors, including mapping, precision farming, surveillance and management of emergencies.

These devices allow a fast and effective data collection in large and difficult-to-access areas, offering detailed and real-time views of the monitored environment. The data treatment devices, according to the invention, comprise a device 12 for transmitting the previously collected data D1.

Further, the data treatment devices, according to the invention, comprise a device 13 for storing the transmitted data D1.

With reference to Figure 1, the system according to the invention comprises a device 20 for processing data D1, in data communication with the treatment devices 11, 12, 13.

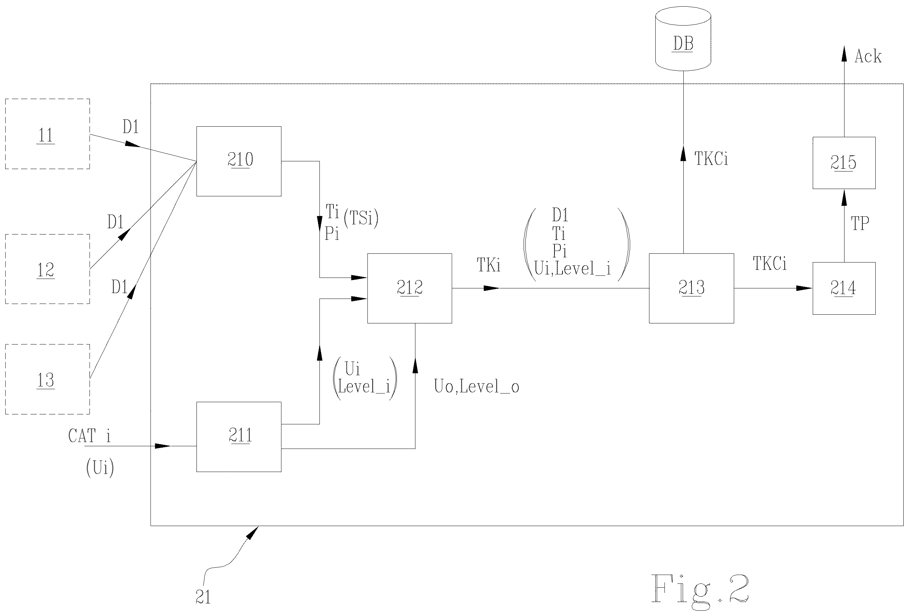

The processing device 20 comprises a processing unit 21 (shown in Figure 1 and in detail in Figure 2).

In general it should be noted that, in this context and in the accompanying claims, the processing unit 21 is presented as divided into separate functional modules (memory modules or operating modules) for the sole purpose of describing the functions in a clear and complete manner.

In reality, the control unit may, in one case, consist of a single electronic device, suitably programmed to perform the functions described and the various modules can correspond to hardware units and/or software routines forming part of the programmed device.

Alternatively or in addition, the functions can be performed by a plurality of electronic devices on which the above-mentioned functional modules can be distributed.

The processing unit 21 may also have one or more processors for the execution of the instructions contained in the memory modules.

The above-mentioned functional modules may also be distributed on different computers, either locally or remotely, on the basis of the architecture of the network on which they are housed.

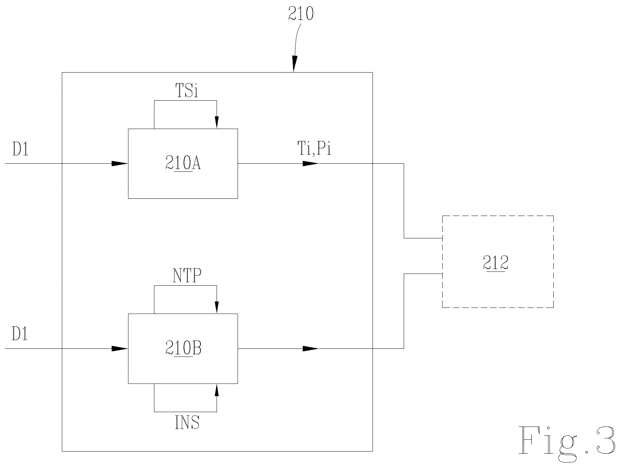

In particular, according to the invention, the processing unit 21 is configured to carry out an analysis on data D1 collected and/or transmitted and/or stored. According to the invention, with reference to Figure 2, the processing unit 21 comprises a definition module 210 configured to define a plurality of time references Ti and position references Pi for the data D1 during the treatment. With specific reference to Figure 3, the definition module 210 comprises a first definition sub-module 210A configured to define the plurality of time references Ti and position references Pi for the data D1 during the treatment, by generating timestamps TSi.

According to a preferred embodiment of the invention, the timestamps TSI are generated via a GNSS system, that is, a global navigation system.

According to the invention, the GNSS system, during the treatment and in real time, associates to the defined timestamps TSi the time references Ti and the position references Pi of the data D1.

The system uses the Global Navigation Satellite System (GNSS) data to generate extremely accurate timestamps. These timestamps are applied at every step of the treatment of the collected data, in particular collected by the UAVs.

The adoption of GNSS augmentation algorithms further increases the time accuracy, allowing a secure and precise validation of the exact moment when each data item is collected and processed.

The timestamps TSi generated by means of GNSS ensure a sub-second registration of the events, minimising the time discrepancies and improving the synchronisation between the data collected and the operations carried out.

The timestamps TSi derived from the GNSS are extremely reliable and resistant to tampering attempts, thus ensuring the integrity of the token generation process. The time validation based on GNSS allows the system to immediately detect and report any anomalies, such as delays or attempts to fraudulently alter data.

The application of GNSS timestamps allows an accurate and unalterable time traceability for each data item, creating a permanent link between the data item, the time of collection and the person responsible (the latter aspect is described in detail below). This level of time accuracy ensures a granular and detailed control over all the phases of the data flows, allowing each operation to be accurately attributed to the person who was responsible at that precise moment.

The integration of the GNSS timestamps not only strengthens the time tracking, but also makes it possible to link every single action or data modification to the individual responsible, significantly improving the individual accountability and the security of the process. The time accuracy is critical in order to ensure that each step can be verified unambiguously, ensuring that every interaction with the data item takes place in compliance with the established rules and that any irregularities can be identified and attributed to a specific moment and the responsible party.

This combined effect provides a traceability that is not only technical but also operational, as it allows monitoring of the person who carried out a certain operation, when it was done and the precise context in which it took place. In this way, the system not only protects the integrity of the data item but also ensures the transparency and verification of the entire data treatment chain.

According to a second embodiment of the invention, with particular reference to Figure 3, the definition module 210 comprises a second definition sub-module 210B configured to define the plurality of time references Ti and position references Pi for the data D1 during the treatment, respectively by means of a network time protocol system NTP and an inertial navigation system INS.

The presence of NTP (Network Time Protocol) and INS (Inertial Navigation System) provides a redundancy for the Time Synchronisation and ensures operational continuity even in the event of loss of the GNSS signal. This redundancy provides an effective backup for the time synchronisation, ensuring that the system can maintain a high level of accuracy even in critical situations. This is fundamental for applications where the time reliability is essential for the data consistency and the operational continuity. The integration of multiple synchronisation sources offers a further level of resilience against hardware failures or signal problems, ensuring that every operation can be carried out accurately and without interruption.

In particular,
the NTP networks are used to synchronise the system clocks with an acceptable accuracy, in the order of milliseconds, especially in the absence or degradation of the GNSS signal. The NTP is widely used to synchronise the devices with reliable time servers, allowing sufficient temporal consistency to be maintained for the data collection and treatment operations. In this way, even if the GNSS proves inaccessible, the system is able to maintain an accurate time basis for the data management.

In particular, moreover, the INSs, through the use of accelerometers and gyroscopes, are able to provide position and movement information even in the absence of a GNSS signal. Although the INSs tend to accumulate errors over time (drift), these systems represent a useful complementary source of information to ensure operational continuity, maintaining a reasonable estimate of the position and the time during periods of GNSS signal loss. For example, during short interruptions of the GNSS signals in operations on drones flying over areas with temporary obstacles, the drift of the INSs may be tolerable in order to ensure the safe continuation of the mission. The INS helps to minimise the impact of the GNSS interruptions, allowing the system to continue to collect and process data with a sufficient accuracy.

According to the invention, with reference to Figure 2, the processing unit 21 further comprises an identification module 211 configured to identify a level of access Level_i to the data D1, to the time references Ti and to the position references Pi based on predefined categories CATi of users Ui.

In other words, the accesses to the data D1 are managed in a granular manner.

The management based on privilege levels reduces the risks of unauthorised access, ensuring the security of sensitive data. The ability to assign different levels of authorisation to various users, depending on their role, allows the principle of least privilege to be applied, wherein each user can only access the information and resources necessary to carry out their activities. This approach greatly increases the security, especially in complex operational contexts where the risk of data compromise is high. For example, the field technicians may have limited access to the monitoring/treatment data, while the system managers may manage the configuration and maintenance parameters. Further, the authorisations can be managed in real time, ensuring a quick response in case of emergencies. This allows privileges to be assigned or revoked quickly according to the situation, improving operational flexibility and the ability to react promptly to critical situations.

Each level of access is tracked and monitored, inseparably associating each interaction with the data item to the authorised person Ui, and to the time and place of access. This control system offers complete visibility into who did what, when and where, improving security and accountability. The granularity of the accesses allows which data can be viewed or modified by each Ui user to be defined exactly, significantly reducing the risk of unauthorised accesses and the possible manipulation or loss of sensitive data.

The granularity of accesses has a fundamental strategic importance: it enables the organisation that manages the system to apply the principle of least privilege, assigning to the users Ui only the permissions necessary to perform their functions. This not only reduces the potential surface of attack in the case of compromise, but also optimises the security management, limiting the exposure of critical data to a small number of people. This type of control ensures that the most sensitive information is only accessible to high-level individuals, while less sensitive data can be handled by users with lower authorisation levels.

In operational terms, the hierarchical authorisation system allows a dynamic adaptation of the access policies. The authorisations can be changed in real time, allowing an immediate response if the security requirements change or incidents occur. This means that data access can be limited or extended quickly without having to redesign the entire system, thus increasing the flexibility and the operational security.

The granular management of the accesses allows the system to adapt in real time to the requirements of the organisation.

In other words, the identification module 211 is configured for adapting dynamically and in real time the identified level of access (Level_i) on the basis of new security requirements requested by the system.

The security policies can be changed depending on the operating context, ensuring that the data remains protected in all situations. For example, during an emergency situation, the accesses could be temporarily expanded to allow key individuals to act quickly, while under normal conditions the access is strictly limited.

In other words, the identification module 211 is configured for identifying a maximum level Level_0 for a priority user U0 for a fast access to all the data D1, to the time references Ti and to the position references Pi in the case of operational emergencies.

This dynamic approach to the security management enables a rapid response to any changes in priority or emerging threats, ensuring that the data is always adequately protected and accessible only to those who are authorised.

According to the invention, again with reference to Figure 2, the processing unit 21 further comprises a generating module 212 configured to generate, during the treatment, a plurality of intermediate registrations TKi comprising the data D1, the respective time references Ti, the position references Pi and identification data of a user Ui authorised to access the data Di at the identified access level Level_i. In other words, the generating module 212 is configured to generate specific tokens during the treatment, where a token is understood to be a preferred embodiment of an intermediate registration of the invention.

Each token generated by the system incorporates position and time data derived from the GNSS, associating them closely with the data collected. This integration ensures that each data item collected is not only temporally marked, but also precisely geolocated, providing a clear and immutable representation of the context in which it was collected.

One of the fundamental characteristics of the system is the unique association between the data D1 collected and the person/user/operator who detected them, through the use of intermediate registrations/specific tokens.

For example, in an environmental monitoring context, these tokens allow the operator/user Ui responsible for a certain data collection to be quickly traced, ensuring a clear identification and responsibility in case of anomalies.

In emergency management situations, the traceability provided by tokens makes it possible to verify who made crucial decisions and at what time, thus improving management of the resources and the operational coordination. This link ensures that each collection operation is tracked not only spatially and temporally, but also from the point of view of individual responsibility, promoting transparency and accountability in the data management operations and improving the overall integrity of the system.

The ability to associate each data item D1 with the person Ui who detected it is a fundamental characteristics of the system, improving the individual responsibility and the data security. This unique link ensures that each operation is fully verifiable and transparent, facilitating the audit and control activities.

For example, in case of operational problems, it is possible to quickly trace the person responsible for the data collection in order to identify any errors or need for intervention, thus ensuring effective control of the operational responsibilities. In other words, during the lifecycle of the data from collection to storage, each data item D1 collected and processed is indissolubly associated with a unique code, which represents not only the data item itself, but also the person Ui who handled it and the operational context in which it was treated.

In situations where multiple individuals are involved, the system tracks each individual contribution, linking each data item to the respective person.

The unique code inextricably links the data item to the person and to the operating context, ensuring that each operation can be accurately attributed to the responsible party.

At any time, it is possible to trace the responsible person, the specific data item and the system that managed that data, ensuring a high level of accountability and transparency.

The integration of position data Pi and time data Ti into the tokens provides complete traceability that links each data item to its collection context. This approach not only allows exact documentation of when and where the data was collected, but also improves the possibility of independent checks and internal audits.

For example, in contexts such as environmental monitoring or the management of emergencies, this characteristic is essential in order to ensure that the decisions are based on accurately registered and easily verifiable information. In addition, the spatial and temporal traceability facilitates the correlation of the data collected with other events, thus improving analysis capabilities.

According to the invention, again with reference to Figure 2, the processing unit 21 also comprises a certification module 213 configured to certify, by means of cryptographic techniques, during the treatment, each intermediate registration of the plurality of intermediate registrations TKi, thereby determining corresponding certified intermediate registrations TKCi.

One of the main aims of the technology described is to generate certificates on the data collected, attesting to the authenticity and integrity of the data itself. These certificates offer numerous advantages, including the ability to demonstrate the compliance with the regulatory requirements, such as the ISO 9001 standards for quality management, improving user confidence and facilitating audit and verification processes. In legal audit contexts, the certificates guarantee the full traceability of the operations, while in the quality checks they ensure that the data have been collected, processed and stored in compliance with the required standards.

The data security is further enhanced by means of the integration of advanced cryptographic techniques, which include the GNSS data in the digital signature processes.

The token is designed to include the exact GNSS coordinates (latitude, longitude and altitude) and the GNSS timestamp, creating a data structure that uniquely integrates the spatial and temporal dimension. The structure of the token comprises cryptographic fields that make the position and time data resistant to tampering attempts, including a digital signature derived from the GNSS data itself. This digital signature is generated using advanced cryptographic algorithms that ensure the integrity of the token and prevent any possible unauthorised modification.

The process of associating data with the position and the time occurs automatically during the collection, minimising the risk of human error and ensuring that each data item has a precise correspondence with the contextual information. Further, the position and time data are encapsulated within the token in a form that allows them to be verified retroactively, enabling identification of any discrepancies or inconsistencies during subsequent analyses.

This approach ensures that each token generated is unique and firmly linked to the time and position of collection.

The cryptographic integration of the GNSS data in the tokens makes it impossible to alter the data without being discovered, ensuring the non-repudiation of the data item.

The combination of cryptographic techniques with the GNSS data strengthens the authenticity and the integrity of the data, preventing any attempt at manipulation or falsification.

Each data treatment or transmission step is cryptographically linked to the time and position of collection, creating a secure flow that inextricably links the data item to the person responsible. This approach ensures that every operation carried out on the data is verifiable and traceable, guaranteeing an intrinsic security throughout the process. The intrinsic security means that the data item is protected at every step, from collection to transmission to storage, without the need for external interventions to guarantee its reliability. The cryptographic algorithms used create a chain of cryptographic blocks that ensure that any changes to the data item can be immediately detected, providing verifiable proof of integrity. The automatic generation of authenticity is based on cryptographic processes that include digital signatures and hashes of the collected data. Once collected, each data item is automatically sealed with a signature attesting to its authenticity. This digital signature, generated at the time of collection, incorporates specific information such as the timestamp and the GNSS coordinates, creating a cryptographic link that cannot be changed without leaving a trace. This approach not only prevents tampering, but also makes it possible to automatically verify the authenticity of each data item retrospectively, without the need for manual validations.

In addition, the combination of the digital signature with the original data item and the context information (such as time and position) allows the system to automatically generate certificates of authenticity for each data item. These certificates can be used for audit purposes, regulatory checks or to demonstrate the validity of the collected data in legal contexts. The automatic generation eliminates the need for an external certifier, increasing operational efficiency and reducing the risks of compromise resulting from human operations.

The intrinsic security of the data flow also extends to the transmission. During the transfer, the data is encrypted using end-to-end encryption techniques that ensure that no information can be intercepted or altered. Each data packet contains cryptographic references that link it to the source tokens, which allows the integrity of each individual packet during the transit to be verified. This approach ensures that the data sent is exactly that collected, without alterations, and that any unauthorised access attempts are immediately detected and reported.

The system is able to automatically generate certificates of authenticity for each data item by associating it with a personal identity, eliminating the need for a final external certifier and offering a further level of security and reliability in the data management process. The generation of the certificate occurs in such a way that every operation on the data item, from the moment of collection to the transmission and the storage, is monitored and traced with cryptographic references that guarantee the inalterability of the data item. The system generates a final, comprehensive and compliant certification of the authentication process for the set of interlinked data, in order to certify the existence of an event capable of generating binding legal effects.

According to the invention, the cryptographic techniques comprise a digital signature system.

The data security is further enhanced by means of the integration of advanced cryptographic techniques, which include the GNSS data in the digital signature processes.

This approach ensures that each token generated is unique and firmly linked to the time and position of collection.

The cryptographic integration of the GNSS data in the tokens makes it impossible to alter the data without being discovered, ensuring the non-repudiation of the data item.

The combination of cryptographic techniques with the GNSS data strengthens the authenticity and the integrity of the data, preventing any attempt at manipulation or falsification.

According to an embodiment of the invention, the cryptographic techniques use modules for optimisation of the cryptographic load, in particular HSM modules. The Encryption Load Optimisation Module improves the efficiency of the system, reducing the impact of cryptographic operations on the processing times and on the computational resources. This module is particularly important in order to ensure the security of the data without compromising the overall performance of the system, especially in contexts where the data collection and processing must take place in real time.

The system according to the invention uses HSMs (Hardware Security Modules) to optimise the most computationally intensive cryptographic operations. The HSMs are hardware devices designed to carry out cryptographic operations securely and with high performance levels. They are used for the generation and management of the cryptographic keys. Further, they manage the encryption and decryption of the data and are used for the digital signatures. Thanks to the use of the HSMs, the computational load on the main machines is reduced, while ensuring the security of the critical processes.

According to the invention, again with reference to Figure 2, the processing unit 21 further comprises a second generating module 214 configured for generating a process registration TP on said data D1 comprising said plurality of intermediate registrations TKi.

In other words, the second generating module 214 is configured to generate a final registration/token representing the entire process for treatment and processing of the data D1.

During the lifecycle of the data, the system generates intermediate tokens that represent individual steps of the treatment and a final token that summarises the entire process. Each token is unique and contains cryptographic references to the GNSS data, ensuring that each step of the process is verifiable.

Each token represents a precise snapshot of a step of the process, ensuring that the entire lifecycle of the data item is independently traceable and verifiable.

The intermediate and final tokens serve as documented evidence, which can be used to verify the integrity and authenticity of the data item retrospectively.

Each token provides a granular documentation of the complete lifecycle of the data item, linking each step to the time, position and the person responsible who remains indissolubly linked to the data item. This creates a detailed archive that can be used for audits and verifications, improving the transparency and security of the process by identifying the segments of responsibility.

In other words, the system according to the invention comprises a database DB of registrations comprising the certified intermediate registrations TKCi.

The generation of the intermediate and final tokens automates the certification of the process, eliminating the need for external interventions and improving the operational efficiency of the system.

According to the invention, again with reference to Figure 2, the processing unit 21 lastly comprises a transmission module 215 configured for transmitting a confirmation Ack of a generated and verified process registration TP.

After the generation of the final token, the system sends an Ack (Acknowledgment) to the person responsible regarding the single fingerprint, confirming that the final certification has been obtained and that the data item has been treated in compliance with all the security and traceability rules.

The Ack provides the person responsible with confirmation that the data item has successfully completed all the treatment steps and has been certified in a secure and traceable manner.

The Ack allows the person responsible to immediately verify that all the operations have been carried out correctly and that the data item complies with the security and traceability standards.

According to a second aspect, the invention describes a method, implemented by means of a computer, for the integrated treatment and processing of data of an operating environment.

According to the invention, the method comprises the following steps:
collecting 11 the data D1;
transmitting 12 the data D1 collected;
storing 13 the data D1 transmitted;
processing 20 the basic data D1 by means of the steps of:
   defining 210 a plurality of time references Ti and position references Pi for the data D1 during the treatment;
   identifying 211 a level of access Level_i to the data D1, to the time references Ti and to the position references Pi on the basis of predefined categories CATi of users Ui;
   generating 212, during the treatment, a plurality of intermediate registrations TKi comprising the basic data D1, the respective time references Ti, the position references Pi and identification data of a user Ui authorised to access the data Di at the identified level of access Level_i;
   certifying 213, by means of cryptographic techniques during the treatment, each intermediate registration of the plurality of intermediate registrations TKi, thereby determining corresponding certified intermediate registrations TKCi.

The method according to the invention, further comprising the step of generating 214 a process registration TP on the data D1 comprising the plurality of intermediate registrations TKi.

The method further comprises additional operating steps corresponding to the operating modules described in the first aspect of the invention.

An integrated system and a method for the treatment and processing of data of an operating environment according to the invention have been described.

The invention provides for an automatic generation of unique registrations, also called tokens, identifying the collected data that are subject to treatment and processing, with the aim of guaranteeing security, integrity, authenticity and traceability of the treated data.

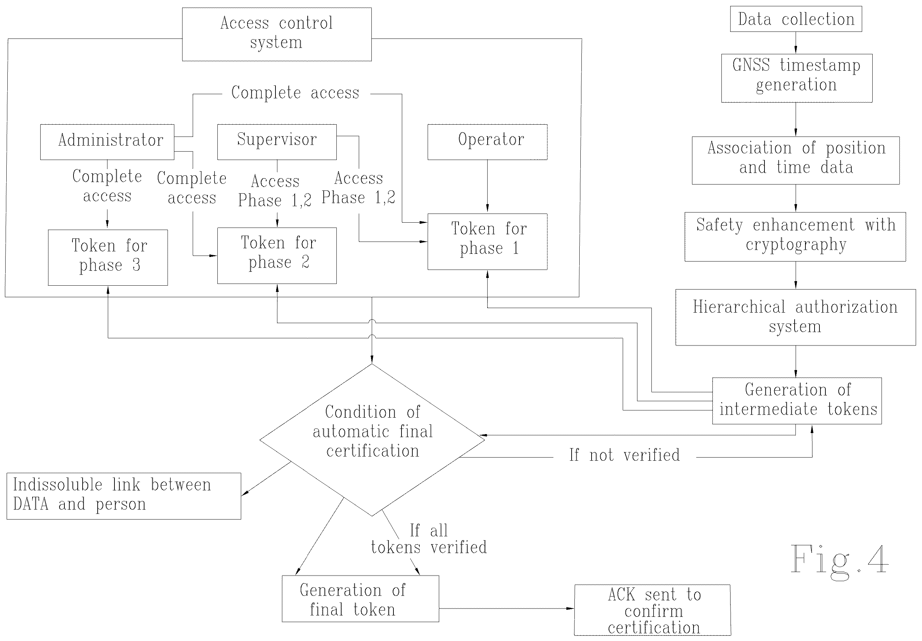

The system is shown in Figure 4 in terms of general functions and in Figures 1 to 3 with regard to specific functions.

The invention achieves at least the following technical effects:
- generation of an indissoluble and certified link between the event, the data detected/treated and the user responsible for the treatment at each step of the treatment process;
- certification of the monitoring chain, to certify the lifecycle of the collected data, from the collection to the transmission up to their processing;
- efficient certification of each sub-step of the treatment chain;
- efficient retrieval / tracking of the collected data in terms of spatial and temporal information and with regards to the user responsible;
- minimal use of transmission bandwidth for communication of the certified data of each sub-step of the treatment chain;
- guarantee of security, integrity, authenticity and traceability of the collected data for the purpose of automating the certification processes;
- ease of reconstruction of operations carried out by the system on the data collected.

## Claims

1. An integrated system for the treatment and processing of data of an operating environment, wherein the system comprises:
a plurality of treatment devices (11, 12, 13) comprising
a device (11) for collecting data (D1) to be treated;
a device (12) for transmitting data (D1) collected;
a device (13) for storing data (D1) transmitted;
a device (20) for processing data (D1), in data communication with said treatment devices (11, 12, 13), wherein the processing device (20) comprises a processing unit (21) in turn comprising:
a definition module (210) configured for defining a plurality of time references (Ti) and position references (Pi) for said data (D1) during the treatment;
an identification module (211) configured for identifying a level (Level_i) for access to the data (D1), to the time references (Ti) and to the position references (Pi) on the basis of predefined categories (CATi) of users (Ui);
a generating module (212) configured for generating during the treatment a plurality of intermediate registrations (TKi) comprising said data (D1), the respective time references (Ti) and the position references (Pi) and identification data of a user (Ui) authorised to access said data (Di) at said identified level of access (Level_i);
a certification module (213) configured for certifying, by means of cryptographic techniques during said treatment, each intermediate registration of said plurality of intermediate registrations (TKi), thereby determining corresponding certified intermediate registrations (TKCi)

2. The system according to claim 1, wherein said processing unit (21) further comprises a second generating module (214) configured for generating a process registration (TP) on said data (D1) comprising said plurality of intermediate registrations (TKi).

3. The system according to claim 1 or 2, wherein said identification module (211) is configured for adapting dynamically and in real time the identified level of access (Level_i) on the basis of new security requirements requested by the system.

4. The system according to any one of the preceding claims, wherein said identification module (211) is configured for identifying a maximum level (Level_0) for a priority user (U0) for a fast access to all the data (D1), to the time references (Ti) and to the position references (Pi) in the case of operational emergencies.

5. The system according to claim 3 or 4, wherein said processing unit (21) further comprises a transmission module (215) configured for transmitting a confirmation (Ack) of a process registration (TP) generated and verified.

6. The system according to any one of the preceding claims, wherein said definition module (210) comprises a first definition sub-module (210A) configured for defining said plurality of time references (Ti) and position references (Pi) for said data (D1) during the treatment, by generating a timestamp (TSi).

7. The system according to claim 6, wherein said timestamps (TSi) are generated by a GNSS system which during said treatment and in real time associates with the defined timestamps (TSi), said time references (Ti) and position references (Pi) of said basic data (D1).

8. The system according to any one of claims 1 to 5, wherein said definition module (210) comprises a second definition sub-module (210B) configured for defining said plurality of time references (Ti) and position references (Pi) for said data (D1) during the treatment, respectively using a network time protocol system NTP and an inertial navigation system INS.

9. The system according to any one of the preceding claims, wherein said cryptographic techniques comprise a digital signature system.

10. The system according to any one of the preceding claims, wherein said cryptographic techniques exploit HSM modules for optimising the cryptographic load.

11. The system according to any one of the preceding claims, wherein said collection device (11) comprises one or more between autonomous and remote controlled vehicles, both terrestrial and maritime and aerial, such as UAS (Unmanned Aircraft Systems), UAV (Unmanned Aerial Vehicles), ROV (Remotely Operated Vehicles) systems.

12. The system according to any one of the preceding claims, comprising a database of registrations (DB) comprising said certified intermediate registrations (TKCi).

13. A method, implemented by a computer, for integrated treatment and processing of data of an operating environment comprising the steps of:
collecting (11) said data (D1);
transmitting (12) the data (D1) collected;
storing (13) the data (D1) transmitted;
processing (20) the basic data (D1) using the steps of:
defining (210) a plurality of time references (Ti) and position references (Pi) for the data (D1) during the treatment;
identifying (211) a level of access (Level_i) to the data (D1), to the time references (Ti) and to the position references (Pi) on the basis of predefined categories (CATi) of users (Ui);
generating (212) during the treatment a plurality of intermediate registrations (TKi) (tokens) comprising said basic data (D1), the respective time references (Ti) and the position references (Pi) and identification data of a user (Ui) authorised to access said data (Di) at said identified level of access (Level_i);
certifying (213), by means of cryptographic techniques during said treatment, each intermediate registration of said plurality of intermediate registrations (TKi), thereby determining corresponding certified intermediate registrations (TKCi).

14. The method according to claim 13, further comprising the step of generating (214) a process registration (TP) on the data (D1) comprising said plurality of intermediate registrations (TKi).
